# EUROPEAN PATENT SPECIFICATION

(11) **EP 1 049 545 B1**
(45) Date of publication and mention of the grant of the patent: **02.01.2003**
(21) Application number: 99906164.1
(22) Date of filing: 21.01.1999
(51) Int. Cl.: B07C 3/08, B07C 3/00, B65G 47/50

(54) **DISPATCH SYSTEM FOR CONTAINERS OF SORTED MAIL AND METHOD THEREFOR**
SENDESYSTEM FÜR BEHÄLTER MIT SORTIERTER POST UND VERFAHREN DAFÜR
SYSTEME D'ACHEMINEMENT DE CONTENANTS DE COURRIER TRIE ET PROCEDE ASSOCIE

(30) Priority: 21.01.1998 US 72032 P
(43) Date of publication of application: 08.11.2000
(73) Proprietor: Siemens Aktiengesellschaft, 80333 München (DE)
(72) Inventor: OLSEN, Douglas, E., Grand Rapids, MI 49546 (US); BROUWER, Gerald, A., Grandville, MI 49418 (US); KLEIN, Hans, J., D-58640 Iserlohn (DE); AXELROD, Steven, A., Grand Rapids, MI 49508 (US); DeVRIES, Charles, R., Grand Rapids, MI 49546 (US); SCHULTZ, Keith, E., Jenison, MI 49428 (US); YOUNG, Bruce, A., Kentwood, MI 49508 (US)
(86) International application number: EP9900317
(87) International publication number: WO99037411

(56) References cited:
- EP-A- 0 575 109
- WO-A-97/36523
- DE-A- 2 753 676
- US-A- 3 214 003
- US-A- 5 414 974

## Description

This invention relates generally to automated sorting and dispatching of mail which is sorted into containers, such as letter trays or tubs, and dispatched to manual carts. In particular, the present invention is directed to a dispatch system for receiving random trays or tubs, each containing sorted letters, and dispatching the containers to particular carts for forwarding to local post offices.

A system according to the preamble of claim 1 is disclosed in EP-A-0 575 109.

The dispatch operation in an automated mail processing and distribution center has traditionally been a labor-intensive operation. Unsorted mail enters the processing and distribution center and is sorted by automated sorting equipment into individual trays and tubs which must then be dispatched to a cart known as an Eastern Regional Mail Container (ERMC) which is a wheeled container with two fixed and two swivel casters. The trays or tubs contain a bar code in order to identify its destination and may be in either an uncovered condition covered with a sleeve or sleeved and banded.

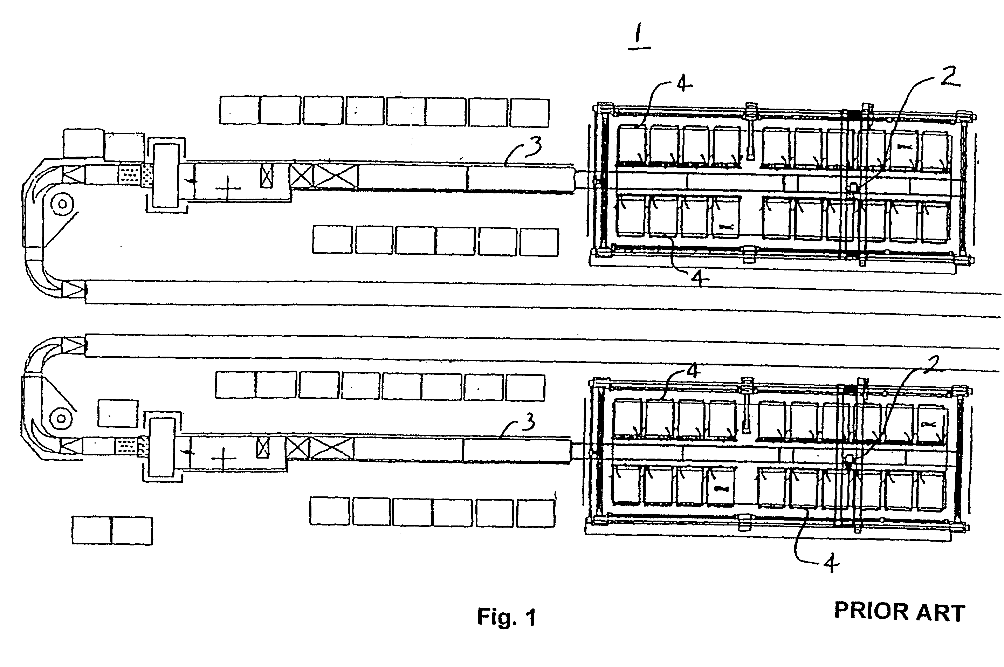

Efforts have been made to reduce the manual labor associated with the dispatching of the letter trays or tubs. However, such efforts have been met with limited success. One attempt at a dispatch system 1, illustrated in Fig. 1, includes a gantry robot 2 which retrieves letter trays from an accumulation conveyor 3 and places each tray in a particular cart 4. Because the dispatch of each tray is by a robot, there is a commensurate reduction in manual labor. However, the throughput for dispatch system 1 is still not satisfactory. The reason is that the robot is capable of moving only a single tray or tub at a time to a cart. Additionally, safety regulations require that when a cart is full and in need of manual removal from the dispatch system, and replaced with an empty cart, it is necessary to mechanically lock out the robot 2 in order to prevent injury. Therefore, each time a cart is full, it is necessary to shut down the entire dispatch system which further reduces the throughput of the system. While it may be possible to adapt dispatch system 1 such that gantry robot 2 could be merely locked out of operation in the area of the cart being removed rather than completely locked out, such selective lock-out for replacement of carts would be complicated and expensive to accomplish.

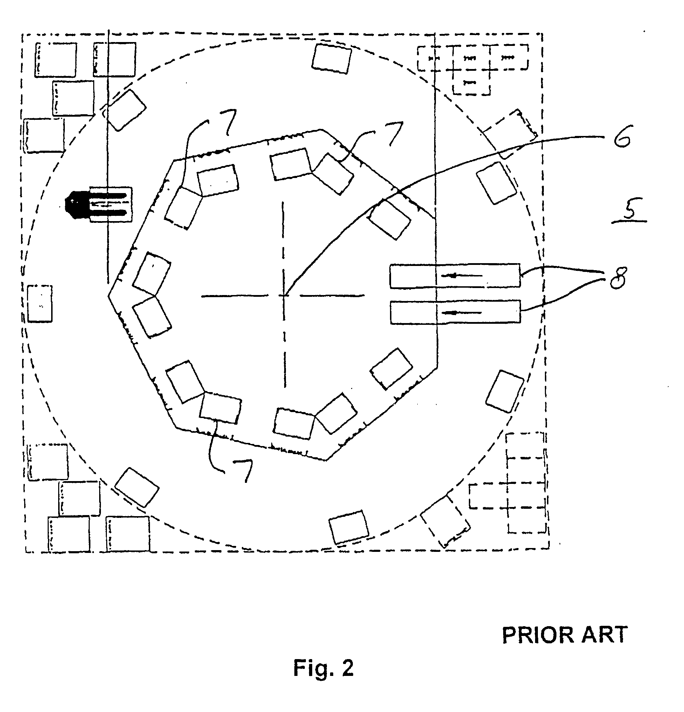

Another prior art dispatch system 5 utilizes a pedestal robot 6 which rotates in order to pick up trays from discharge conveyor 8 (Fig. 2) and places them into cart 7. Dispatch system 5 suffers from many of the same limitations as dispatch system 1. When a cart 7 is full, it is necessary to lock out robot 6 while the personnel changes out any of cart 7.

In addition to the limitations set forth above, prior known dispatch systems are limited to handling only mail trays which are sleeved prior to the dispatching operation. This results in a lack of flexibility further restricting usefulness of the prior art systems.

Therefore, the object of the present invention is to provide a dispatch system and a method therefor which significantly increase throughput. It would additionally be desirable to provide a dispatch system which is capable of handling both trays and tubs of various sizes as well as containers which are uncovered, sleeved, or covered with cardboard. All of this should preferably be accomplished in a system which minimizes vertical height because installations often take place in older facilities which have limited ceiling heights. Any such dispatch system must comply with all pertinent safety requirements.

A solution for this object is given by the dispatch system for randomly arranged containers of sorted mail as described in claim 1 and by the method as claimed by claim 26. Preferred embodiments of the invention are provided by the claims 2 to 25 and 27 to 31.

A high throughput dispatch system, according to an aspect of the invention which dispatches randomly arranged containers of sorted mail to particular dispatch carts, includes a sortation conveyor having a main line defined by a conveying surface, a plurality of spurs extending from the main line, and a diverter mechanism at each of the spurs. The diverter mechanism selectively diverts containers from the conveying surface onto one of the associated spurs. A postal dispatch system, according to this aspect of the invention, further includes at least one transport mechanism which transports containers from each of the spurs to a container juxtaposed with the spur.

The present invention is based upon a recognition that system throughput can be significantly increased by separating the sortation function from the cart-loading function. By separating these functions, it is possible to have a larger number of transport mechanisms, which, when operating in combination, can significantly increase throughput. The greater number of transport mechanisms increases throughput while the system is in full operation. Furthermore, because only the transport mechanism associated with a particular cart needs to be mechanically locked out of operation while that particular cart is being replaced with an empty cart, it is not necessary to lock out the entire system in order to replace a full cart with an empty cart. Thus, system throughput is further enhanced.

A container dispatch system, according to another aspect of the invention, includes a sortation conveyor as previously set forth and a transport mechanism associated with each of the spurs. The transport mechanism transports containers from the spur to a subjacent cart and includes an extendable support member and vertical lift. The extendable support member is adapted to retrieving containers from the spur and inserting the containers to the associated cart. The vertical lift is adapted to moving the support member between the vertical level of the spur and the vertical level of the cart. The extendable support member is figured in order to advantageously be able to handle more than one size of container. This allows the transport mechanism to transport trays and tubs of various dimensions. Advantageously, the extendable support member engages the underside of the container which allows the system to handle both covered and uncovered containers.

A method of dispatching randomly ordered containers of sorted mail to carts, according to another aspect of the invention, includes sorting containers to particular locations, each location associated with a cart and transporting containers between each of such particular locations and the associated cart.

These and other objects, advantages and features of this invention will become apparent upon review of the following specification in conjunction with the drawings.
- Fig. 1: is a top plan view of a prior art dispatch system;
- Fig. 2: is the same view as Fig. 1 of another prior art dispatch system;
- Fig. 3: is a top plan view of a high throughput dispatch system, according to the invention;
- Fig. 4: is an enlarged view of the area illustrated in phantom and designated IV in Fig. 3;
- Fig. 5: is a dispatch subsystem;
- Fig. 6: is a sectional view taken along the lines VI-VI in Fig. 5;
- Fig. 7: is a side elevation taken along the lines VII-VII in Fig. 5;
- Fig. 8: is a rear elevation of a transport mechanism;
- Fig. 9: is a side elevation of the transport mechanism in Fig. 8;
- Fig. 10: is a side elevation of an extendable support member of a transport mechanism;
- Fig. 11: is a top plan view of the support member in Fig. 10;
- Fig. 12: is a side elevation illustrating safety caging around a transport mechanism;
- Fig. 13: is a top plan view illustrating safety caging around several adjacent transport mechanisms;
- Fig. 14: is a rear end side elevation of a cart loaded with a particular type of tray;
- Fig. 15: is a rear end side elevation of a cart loaded with a particular type of tub;

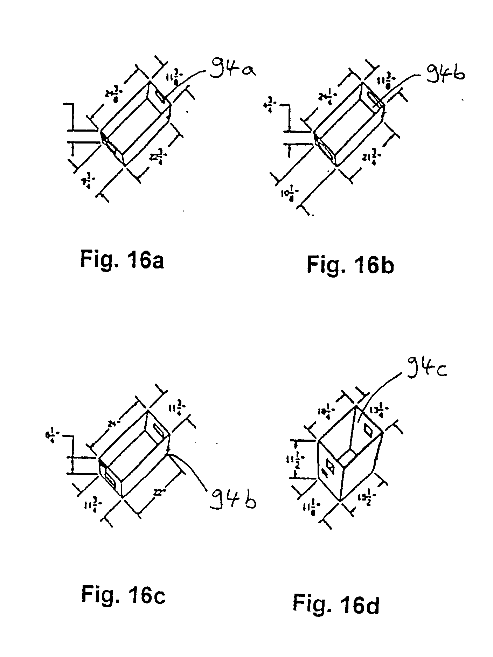

- Figs. 16a-d: are perspective views of various containers which can be dispatched with the dispatch system;
- Figs. 17a-c: are rear elevations of sortation spurs used with different types of containers; and
- Fig. 18: is a top plan view of an alternative embodiment of the invention.

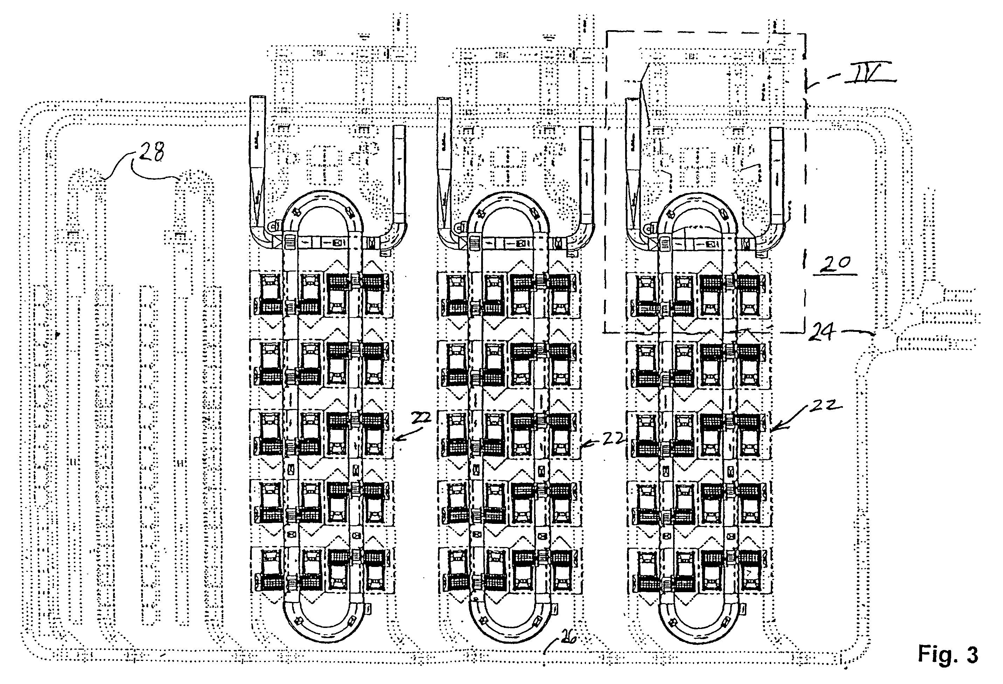

Referring now specifically to the drawings, and the illustrative embodiments depicted therein, a high throughput dispatch system 20 as illustrated in Fig. 3 may include a plurality of dispatch subsystems 22. The number of subsystems may be selected according to the particular application. In the illustrated embodiment, mail is sorted onto trays using conventional sorting equipment (not shown) and delivered to a merge area 24, shown in phantom, which feeds a sortation subsystem 26, also shown in phantom, which diverts individual trays of sorted mail to each dispatch subsystem 22 as well as to one or more optional manual dispatch areas 28, also shown in phantom. As will be explained in more detail below, the dispatch system 20 automatically dispatches the trays of sorted letters to conventional ERMC or similar USPS rolling stock.

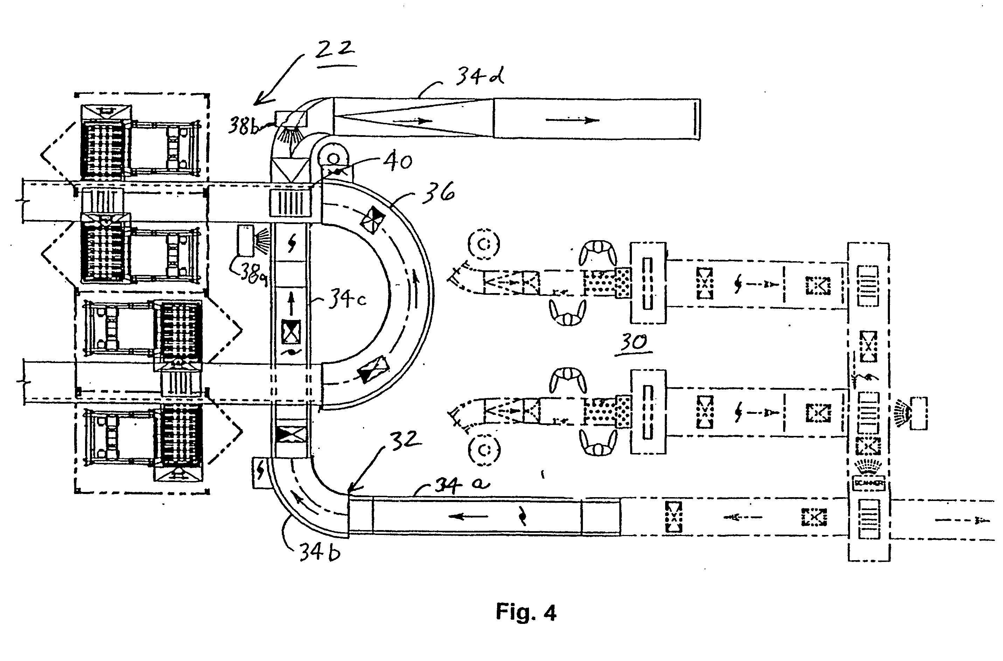

In the illustrated application, the letter trays may be sleeved and banded or unsleeved prior to dispatching. Accordingly, as illustrated in Fig. 4, the take off lines of the sortation subsystem 26 lead to manual predispatching operations illustrated in phantom at 30. It is to be understood that in other applications such predispatching operations may not be provided. From the predispatching operation 30, an input conveyor 32, which, in the illustrated embodiment; is made up of an incline belt conveyor 34a, a turn conveyor 34b, an incline belt conveyor 34c, and a "no read" discharge chute 34d, intersects with a sortation line 36. Either scanner 38a or 38b reads bar codes (not shown) on the sides of mail containers, and, if a successful read occurs, a diverter 40 diverts the container onto sortation line 36. If a successful read does not occur, the container continues to chute 34d.

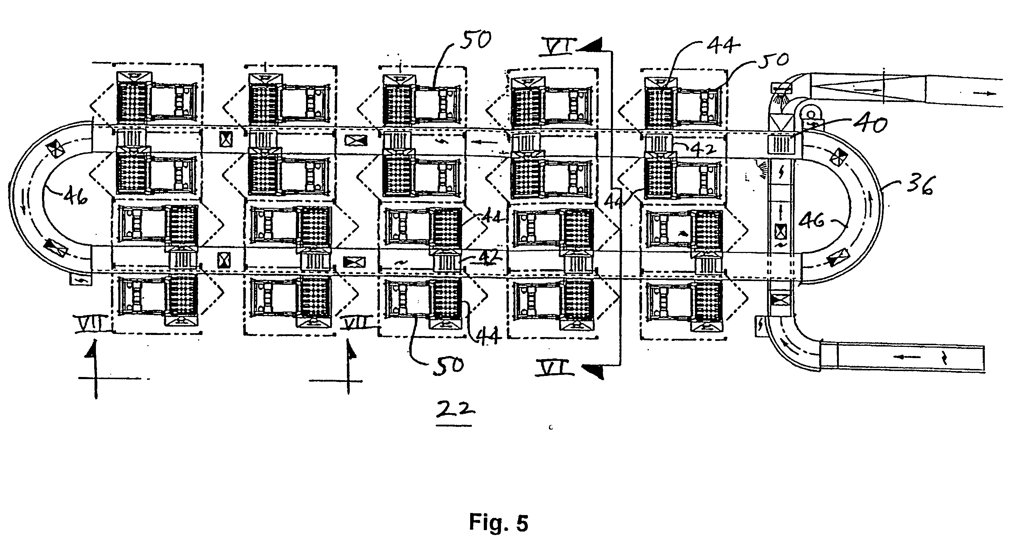

Once on sortation line 36, the container travels past a series of diverters 42 (Fig. 5). Each diverter 42 is adapted to diverting containers laterally off the conveying surface of sortation line 36 onto a spur 44. In the illustrated embodiment, a pair of spurs 44 are positioned on opposite sides of sortation line 36 in which case, diverter 42 is a bidirectional diverter. It should be understood that, in other applications, the spurs may be arranged on a single side of sortation line 36, in which case diverter 42 is a unidirectional diverter. In the illustrated embodiment, the conveying surface of sortation line 36 is made up of a multiplicity of generally parallel powered rollers. Diverter 40 and 42 is a powered pop-up diverter. The powered roller conveyor is preferably a line-shaft conveyor of the type commercially available from Mannesmann Dematic Rapistan Corp., although other powered roller conveyors or other powered conveying surfaces may be utilized. Although in the illustrated embodiment diverters 40, 42 are pop-up belt driven diverters, other diverters, such as wheel diverters, positive displacement diverters, pushers, and the like, may be utilized. In the illustrated embodiment, sortation line 36 is in the form of a closed circuit. This configuration provides for recirculation of containers which are unable to be diverted upon their first pass for whatever reason. In such configuration sortation line 36 includes semicircular end sections 46 which are made from belt turn conveyors of the type manufactured by Mannesmann Dematic Rapistan Corp. It should be understood that sortation line 36 could, alternatively, be oriented in a straight line or any other geometric layout suitable to the application.

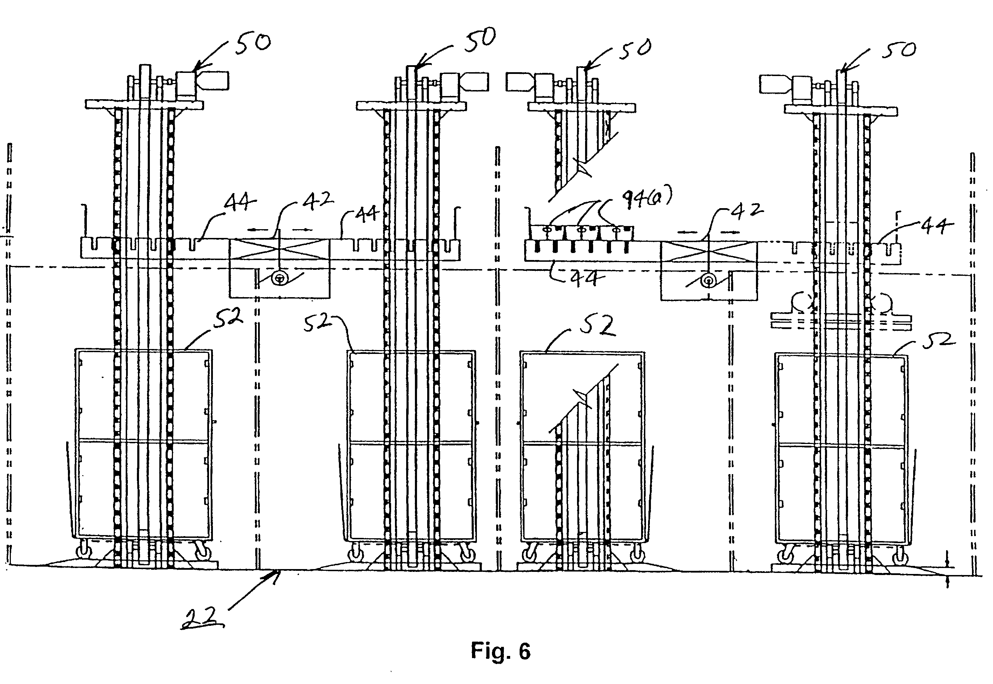

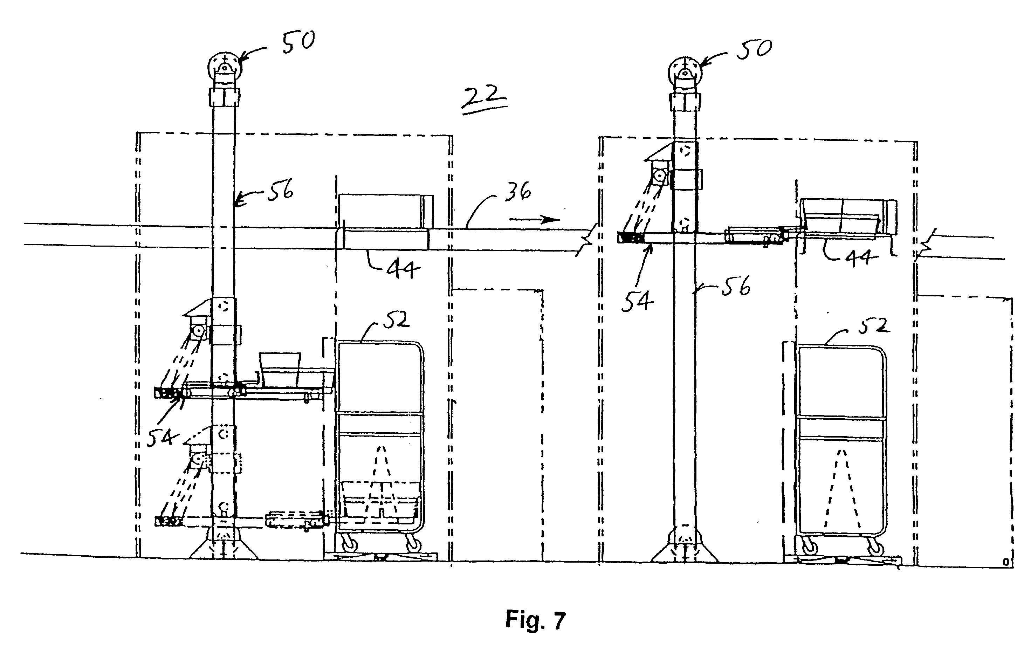

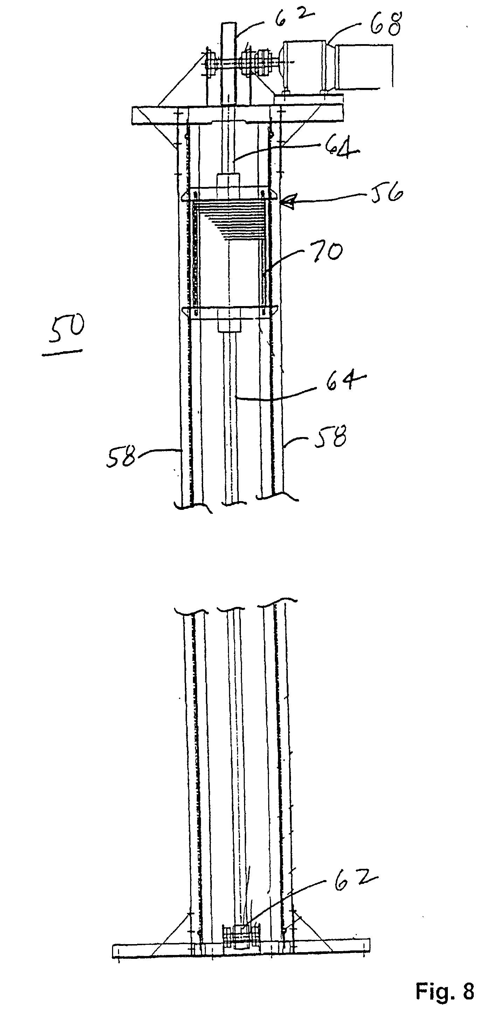

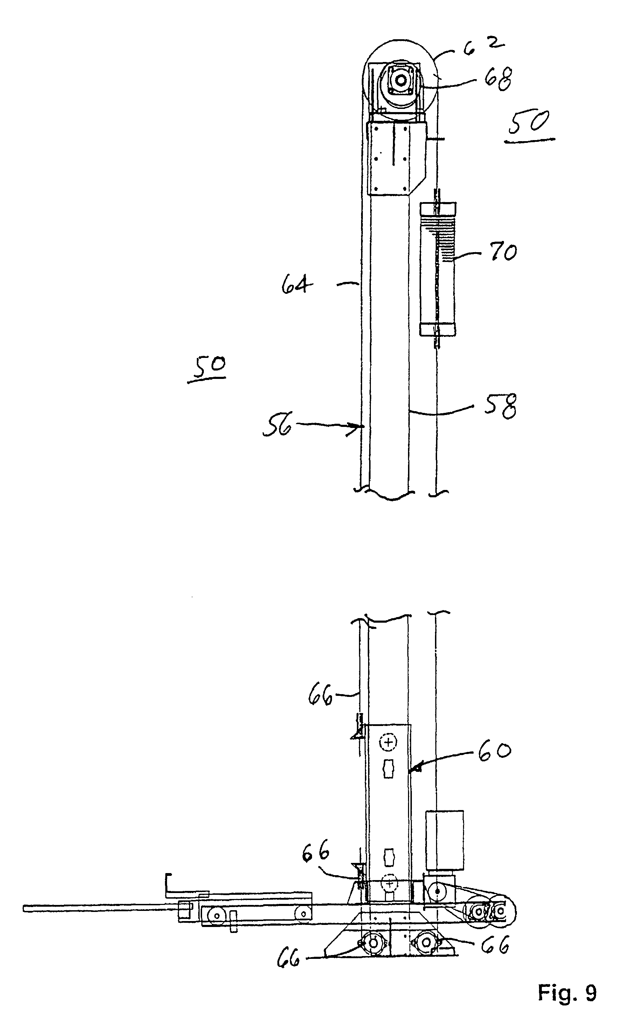

Each dispatch subsystem 22 includes one or more transport mechanisms 50. Each transport mechanism 50 transports containers from one of the spurs 44 to a cart 52 positioned subjacent to the associated spur (Figs. 6 and 7). Each transport mechanism 50 includes an extendable support member 54 (Fig. 7) which retrieves containers from the associated spur and which inserts the containers into the associated cart 52. Transport mechanism 50 additionally includes a vertical lift 56 which moves support member 44 between the vertical level of the associated spur 44 and the vertical level of the associated cart 52. Vertical lift 56 includes a pair of vertically oriented beams 58 and a trolley 60 which is supported for traveling along the length of beams 58 (Figs. 8 and 9). A plurality of spaced apart sheaves 62 rotatably supports a belt 64 whose ends 66 are attached to trolley 60. A servo-controlled motor 68 rotates the upper sheave 62 thereby moving belt 64 and trolley 60 attached thereto. A counterweight 70, which is sized to the weight of trolley 60 plus half of the anticipated load, is attached to belt 64 opposite trolley 60 in order to reduce the amount of torque required from motor 68.

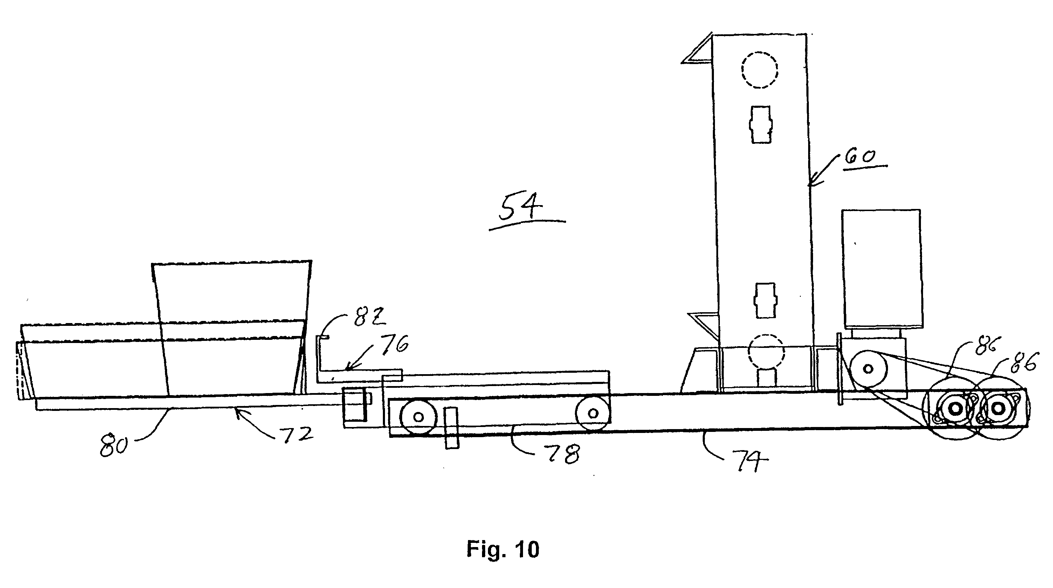

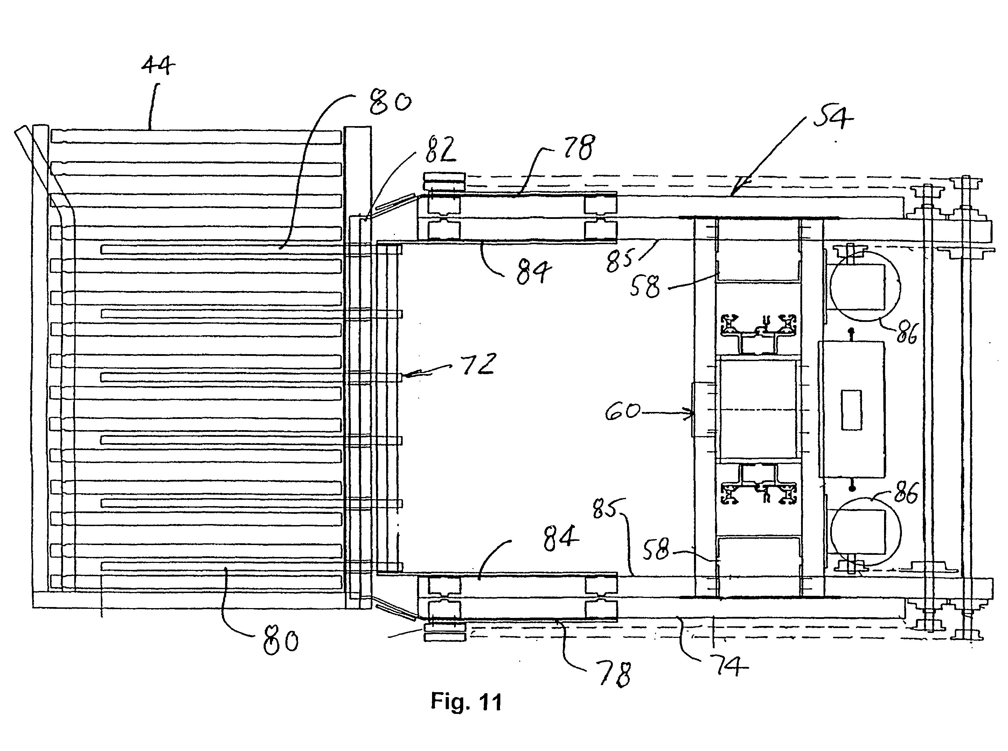

Extendable support member 54 includes a container lift member 72 which is extendable along tracks 74 and a stripper 76 which is selectively movable with respect to lift member 72 along tracks 85 (Figs. 10 and 11). Lift member 72 includes a car 78 which rides horizontally along tracks 74 and a set of fingers 80 which are adapted to engaging containers in a manner that will be set forth in more detail below. Stripper 76 includes an abutment 82 and a car 84 which rides along tracks 85 independently of lift member 72. First and second motors 86 control the respective movement of cars 78 and 84 in order to selectively extend and retract lift member 72 and stripper 76. In particular, lift member 72 and stripper 76 extend and retract together in order to lift one or more containers from a spur 44 and to deposit the container or containers on the associated cart 52. Alternatively, stripper 76 may remain stationary while lift member 72 extends. Once the container, or containers, has been deposited on the cart, stripper 76 remains stationary while lift member 72 retracts in order to prevent the container or containers from retracting with the lift member. In the illustrated embodiment, motors 86 are variable frequency motors in order to provide precise control over acceleration of lift member 72 and stripper 76. Preferably, motors 86 are controlled in such a manner in order to provide a constant acceleration during a first half of the travel and a constant deceleration during a second half of the travel of the members.

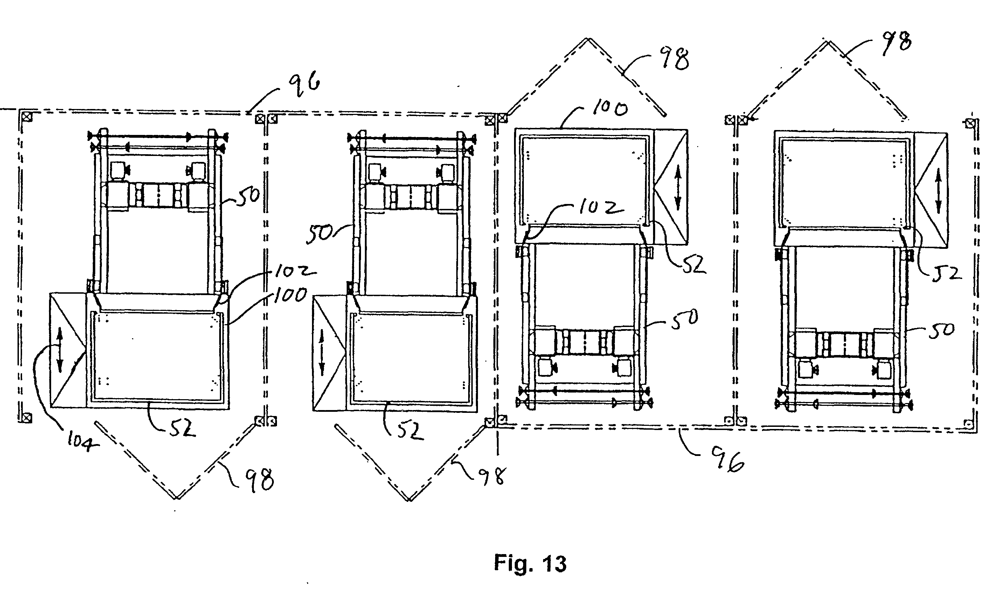

As illustrated in Fig. 13, each transport mechanism has a docking station 100 associated therewith. Docking station 100 has grooves (not shown) to accommodate wheels of carts 52 and is movable in the direction of arrow 104 to allow a cart to be wheeled on and off the docking station. Docking station 100 further includes an alignment device 102 positioned adjacent the cart in order to align packages being inserted in the cart. In the illustrated embodiment, alignment device 102 is funnel shaped.

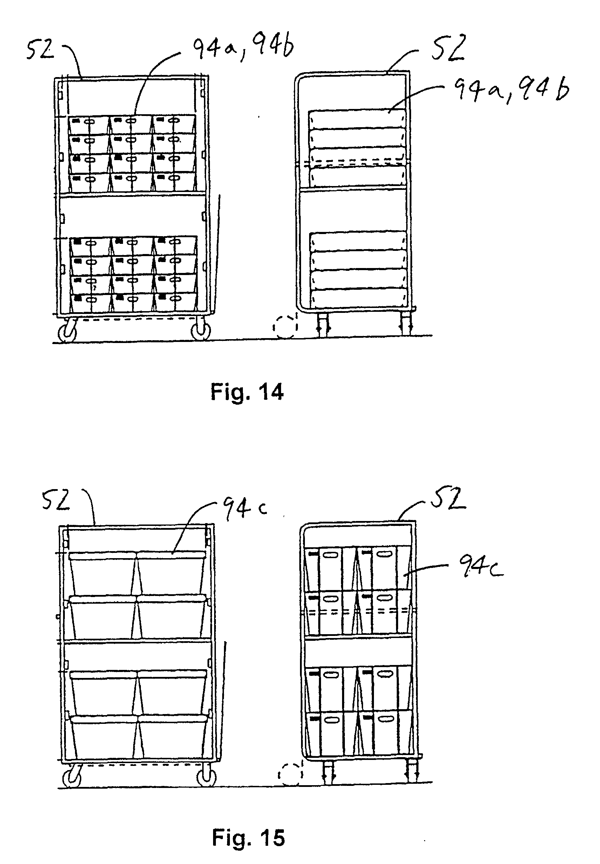

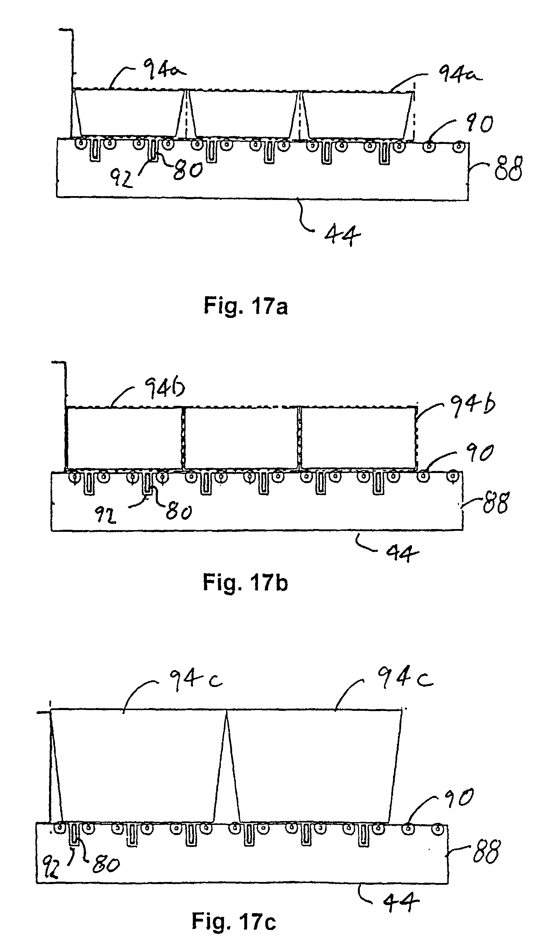

Each spur 44 is made up of a frame and a series of rollers 90 which may be gravity rollers or powered rollers (Figs. 17a-17c). A series of slots 92 are formed in frame 88 between rollers 90. Fingers 80 are configured to pass through slots 92 of the spur 44 as the lift member 72 extends and elevates in order to retrieve containers from the associated spur 44. This configuration allows the dispatch system to handle various sizes of containers. Fig. 17a illustrates the dispatch system handling a tray 94a having sloped sides. Fig. 17b illustrates the dispatch system handling a tray 94b having straight sides. Fig. 17c illustrates the dispatch system handling a tub 94c which is significantly larger than trays 94a and 94b. As illustrated in Fig. 14, trays 94a and 94b are arranged on carts 52 in single file with three columns of four trays each. In contrast, Fig. 15 illustrates that tubs 94c are arranged in double file depth with two columns of two-high each. Dispatch system 20 can handle interchangeably both trays and tubs as follows.

When trays 94a, 94b are being dispatched, the associated diverter diverts trays onto a spur 44 until a particular number of trays, such as three trays, are diverted. At that time, lift member 72 retrieves the three trays and vertical lift 56 lowers the lift member to the appropriate height with respect to the cart 52. The lift member is extended along with the stripper above the previously deposited trays as illustrated in the left view of Fig. 7, and the lift member is retracted while the stripper is maintained in its extended position in order to deposit the trays.

In contrast, when tubs 94c are being handled by dispatch system 20, a diverter 42 diverts tubs to the appropriate spur 44 until a particular number of tubs, such as two tubs, have been diverted to that spur. At that time, lift member 72 is extended and the two tubs are lifted onto the lift member and the lift member is retracted from the spur. However, the vertical lift does not move the extendable support member at that time. After the divert 42 has diverted two more tubs to spur 44, the lift member is, again, extended and the remaining two tubs are loaded onto the lift member along with the previously two loaded tubs. At this time, the vertical lift lowers the extendable support member to the appropriate elevation with respect to cart 52 and the entire four tubs are loaded onto the cart in the manner previously described.

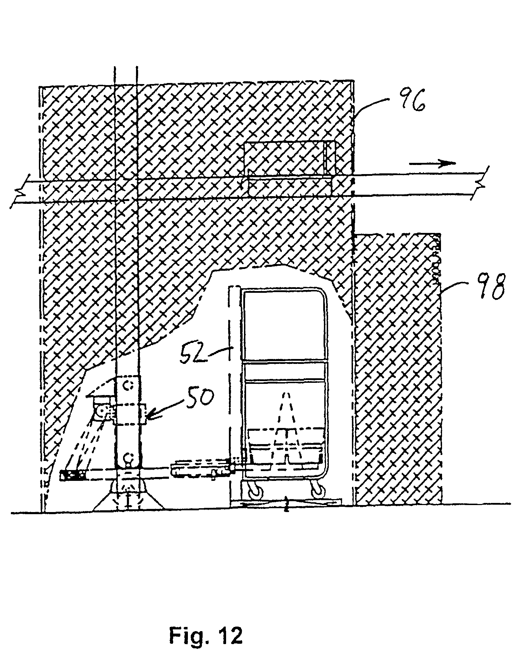

This cycle of diverting trays or tubs onto spurs and transporting the containers between each of the spurs and the associated cart continues until a particular cart is full. At that time, the transport mechanism associated with that cart is mechanically electrically locked out from operation and thereby inhibited from further movement. As illustrated in Figs. 12 and 13, each cart area including transport mechanism 50 is surrounded with a fence 96 having a movable gate 98. When a cart 52 is full, gate 98 is opened and the cart is withdrawn and an empty cart inserted in its place. Once gate 98 is, again, closed, the associated transfer mechanism 50 is enabled for operation. An advantage of this arrangement is that only one transport mechanism 50 needs to be locked out when a cart is full with the remaining transport mechanisms and spurs operational to sort and transport containers. This greatly increases throughput because it is not necessary to shut down the entire dispatch subsystem every time a cart is full.

Thus, it is seen that the invention provides a unique dispatch system for use with a mail processing and distribution center which dispatches sorted containers of letters which are randomly presented to the dispatch system to appropriate carts for dispatching to individual post offices or other USPS facilities. By separating the sorting and transporting functions, a dispatch system according to the invention allows each function to take place at its necessary pace without interfering with the pace of the other function. Furthermore, the transportation function can be subdivided into as many transportation units as necessary in order to balance with the load of the sortation function. Additionally, this allows the system to continue operating at virtually full capacity even when one or more full carts are being exchanged with empty carts. Furthermore, the invention can be carried out in a relatively low ceiling height. Advantageously, a dispatch system, according to the invention, can handle numerous sizes and shapes of containers as well as containers which are sleeved and unsleeved. This greatly increases the versatility of the system.

Various alternatives are possible. For example, rather than vertically transporting containers from the spur to a subjacent cart, it is within the scope of the invention to elevate the cart with respect to the spur and transfer containers directly from the spur to the cart. While such configuration may reduce cycle time, it results in an overall increase in the height of the system. This embodiment may be desirable where ceiling heiglit is not a significant factor.

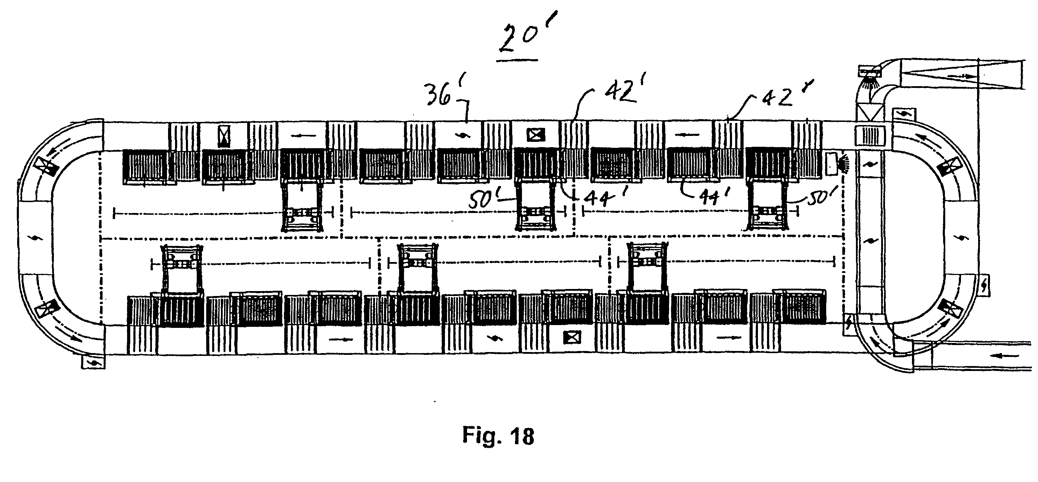

In another alternative embodiment illustrated in Fig. 18, a dispatch system 20' includes a sortation line 36' which is illustrated as a unidirectional divert but also could be a bidirectional divert. Sortation line 36' includes a plurality of diverters 42' each associated with a spur 44'. Diverter 42' both diverts containers off from sortation line 36' and transports containers at a right angle from the initial divert onto spur 44'. In this embodiment, a plurality of transport mechanisms 50' are provided, but each transport mechanism 50' is movable between a given plurality of spurs 44'. Thus, when a particular spur is full, the transport mechanism 50' moves to that spur, transports the row of containers to the subjacent cart (not shown), and inserts the containers onto the cart. The transport mechanism 50' is then free to move to another spur to transfer its load. In dispatch system 20', it would be necessary to disable the transport mechanism 50' when any one of the multiple carts being serviced thereby is full. Therefore, dispatch system 20' may have a somewhat reduced throughput, but at a cost savings.

Changes and modifications in the specifically described embodiments can be carried out without departing from the principles of the invention, which is intended to be limited only by the scope of the appended claims.

### List of reference numbers

- 1: dispatch system
- 2: gantry robot
- 3: accumulation conveyor
- 4: cart
- 5: dispatch system
- 6: pedestal robot
- 7: cart
- 8: discharge conveyor
- 20, 20': dispatch system
- 22: dispatch subsystem
- 24: merge area
- 26: sortation subsystem
- 28: manual dispatch area
- 30: manual predispatching operation
- 32: input conveyor
- 34a: incline belt conveyor
- 34b: turn conveyor
- 34c: incline belt conveyor
- 34d: "no read" discharge chute
- 36, 36': sortation line
- 38a: scaner
- 38b: scanner
- 40: diverter
- 42, 42': diverter
- 44, 44': spurs
- 46: semicircular end section
- 50, 50': transport mechanism
- 52: cart
- 54: extendable support member
- 56: vertical lift
- 58: beams
- 60: trolley
- 62: sheaves
- 64: belt
- 66: ends of 64
- 68: servo-controlled motor
- 70: counterweight
- 72: container lift member
- 74: track
- 76: stripper
- 78: car
- 80: finger
- 84: car
- 85: track
- 86: motor
- 90: rollers
- 92: slot
- 94a: tray
- 94b: tray
- 94c: tub
- 96: fence
- 98: movable gate
- 100: docking station
- 102: alignment device
- 104: direction of movement of 100

## Claims

1. A postal dispatch system (20, 20') comprising:
a sortation conveyor (36, 36') having a main line defined by a conveying surface and conveying randomly arranged containers (94) of sorted mail, a plurality of spurs (44, 44') extending from said mail line in the direction of particular dispatch carts (52), and a diverter mechanism (42,42') at each of said spurs (44, 44') which selectively diverts containers (94) from said conveying surface onto the associated one of said spurs (44, 44');
**characterized in** at least one transport mechanism (50, 50') which transports containers (94) from each of said spurs (44, 44') to a cart (52) juxtaposed with that spur (44, 44').

2. The system according to claim 1,
wherein said at least one transport mechanism (50, 50') is automatically operated and said carts (52) are hand-operated.

3. The system according to claim 1 or 2,
wherein said conveying surface is a continuous loop.

4. The system according to any of the claims 1 to 3,
including another diverter mechanism (40) which diverts containers (94) from a feed line (26) onto said conveying surface.

5. The system according to any of the claims 1 to 4,
wherein said at least one transport mechanism (50, 50') lowers containers (94) from each of said spurs (44, 44') to a subjacent cart (52) associated with that spur (44, 44').

6. The system according to any of the claims 1 to 5,
wherein said at least one transport mechanism (50, 50') includes a plurality of stationary transport mechanisms (50, 50'), one associated with each of said spurs (44, 44').

7. The system according to any of the claims 1 to 6,
wherein said at least one transport mechanism (50, 50') travels between plural ones of said spurs (44, 44').

8. The system according to any of the claims 1 to 7,
wherein said at least one transport mechanism (50, 50') raises a subjacent cart (52) associated with that spur (44, 44') to the level of that spur (44, 44') and moves containers (94) directly from the spur (44, 44') to the cart (52).

9. The system according to any of the claims 1 to 8,
wherein said transport mechanism (50, 50') indcludes an extendable support member (54) and a vertical lift (56), said extendable support member (54) is adapted to retrieving containers (94) from said at least one of said spurs (44, 44') and inserting containers (94) to the associated cart (52) and said vertical lift (56) adapted to moving said support member (54) between the vertical level of said one of said spurs (44, 44') and the vertical level of the associated cart (52).

10. The system according to claim 9,
wherein said extendable support member (54) includes a plurality of fingers (80) which comb between portions of said at least one of said spurs (44, 44') below containers (94) supported on that spur (44, 44').

11. The system according to claim 10,
wherein said spur (44,44') includes a conveying surface made up of a plurality of roller members (90) and wherein said fingers (80) comb between said roller members (90).

12. The system according to claim 10 or 11,
wherein said vertical lift (56) elevates said fingers (80) upwardly in order to retrieve a container (94) from said one of said spurs (44, 44') and elevates said fingers (80) downwardly in order to insert a container (94) to the associated cart (52).

13. The system according to claims 8 to 12,
wherein said extendable support member (54) is extended according to a controlled acceleration profile.

14. The system according to claim 13,
wherein said extendable support member (54) is extended by a variable frequency motor.

15. The system according to claim 9 to 14,
wherein said vertical lift (56) is servo controlled.

16. The system according to claim 1 to 15,
including a plurality of said transport mechanisms (50, 50'),
wherein each of said transport mechanisms (50, 50') is inhibited from operation when a cart (52) serviced by that transport mechanism (50, 50') is being replaced.

17. The system according to claim 1 to 16,
wherein other transport mechanisms (50, 50') are not inhibited from operation when one of said transport mechanisms (50, 50') is inhibited from operation.

18. The system according to claim 1 to 17,
wherein said conveying surface is defined by a plurality of
powered rollers, or by a line shaft conveyor.

19. The system according to according to any of the claims 1 to 18,
wherein each of said diverters (42) is a pop-up diverter.

20. The system according to claim 1 to 19,
wherein said spurs (44, 44') are arranged on both sides of said conveying surface and wherein each of said diverters (42) is bidirectional.

21. The system according to any of the claims 1 to 20,
including an alignment device (102) positioned adjacent each of said carts (52) which aligns containers (94) being inserted to the associated cart (52).

22. The system according to claim 21,
wherein said alignment device (102) is funnel shaped.

23. The system according to any of the claims 9 to 22,
wherein said fingers (80) are extendable horizontally in order to engage a container (94).

24. The system according to any of the claims 9 to 22,
wherein said extendable support member (54) further includes a stripper member (76) extendable horizontally independently of said fingers (80) in order to slide containers (94) off of said fingers (80).

25. The system according to any of claims 1 to 24,
including a plurality of cart areas each having an enclosure (96) with a movable gate (98) that can be selectively opened to allow other carts (52) in other cart areas to be loaded while one cart (52) is being removed.

26. A method of dispatching randomly ordered containers (94) of sorted mail to dispatch carts (52), comprising:
sorting containers (94) to particular locations, each associated with a hand-operated cart (52); and automatically transporting containers (94) between each of said particular locations and the associated cart (52).

27. The method according to claim 26,
wherein said transporting includes accumulating a layer of containers (94) at a particular location and transporting said layer between that location and the associated cart (52).

28. The method according to claim 27,
wherein said accumulating a layer includes accumulating a row of containers (94) at said particular location, shifting the row of containers and accumulating another row of containers (94) at said particular location.

29. The method according to claim 27 or 28,
wherein said sorting containers includes
providing a sortation conveyor (36, 36') having a main line defined by a conveying surface and a plurality of spurs (44, 44') positioned along said main line and further includes diverting containers (94) from said conveying surface to spurs (44, 44') at said particular locations.

30. The method according to any of the claims 26 to 29,
wherein said transporting containers (94) includes positioning an associated cart (52) below the associated location and causing relative movement between containers (94) at the particular location and the associated cart (52).

31. The method according to any of the claims 26 to 30,
wherein a plurality of cart areas are provided each having an enclosure (96) with a movable gate (98) and selectively opening one of said gates (98) to allow other carts (52) in other carts areas to be loaded while one cart (52) is being removed.

## Patentansprüche

1. Postversandsystem (20, 20'), das Folgendes umfasst: einen Sortierförderer (36, 36') mit einer von einer Förderfläche definierten Hauptlinie, mit dem ungeordnete Behälter (94) mit sortierter Post befördert werden, mehrere sich von der Hauptlinie in die Richtung bestimmter Versandkarren (52) erstreckende Nebenlinien (44, 44') und einen Umleitmechanismus (42, 42') an jeder der Nebenlinien (44, 44'), mit dem Behälter (94) gezielt von der Förderfläche auf die zugeordnete der Nebenlinien (44, 44') umgeleitet werden, **gekennzeichnet durch** mindestens einen Transportmechanismus (50, 50'), mit dem Behälter (94) von jeder der Nebenlinien (44, 44') zu einem an die Nebenlinie (44, 44') angrenzenden Karren (52) transportiert werden.

2. System nach Anspruch 1, bei dem der mindestens eine Transportmechanismus (50, 50') automatisch betrieben wird und die Karren (52) von Hand betrieben werden.

3. System nach Anspruch 1 oder 2, bei dem es sich bei der Förderfläche um eine Endlosschleife handelt.

4. System nach einem der Ansprüche 1 bis 3, das einen weiteren Umleitmechanismus (40) umfasst, der Behälter (94) von einer Zufuhrlinie (26) auf die Förderfläche umleitet.

5. System nach einem der Ansprüche 1 bis 4, bei dem der mindestens eine Transportmechanismus (50, 50') Behälter (94) von jeder der Nebenlinien (44, 44') auf einen dieser Nebenlinie (44, 44') zugeordneten, darunter liegenden Karren (52) absenkt.

6. System nach einem der Ansprüche 1 bis 5, bei dem der mindestens eine Transportmechanismus (50, 50') mehrere feststehende Transportmechanismen (50, 50') umfasst, wobei jeder der Nebenlinien (44, 44') jeweils einer zugeordnet ist.

7. System nach einem der Ansprüche 1 bis 6, bei dem der mindestens eine Transportmechanismus (50, 50') zwischen mehreren der Nebenlinien (44, 44') hinund hergeht.

8. System nach einem der Ansprüche 1 bis 7, bei dem der mindestens eine Transportmechanismus (50, 50') einen dieser Nebenlinie (44, 44') zugeordneten, darunter liegenden Karren (52) auf das Niveau dieser Nebenlinie (44, 44') anhebt und Behälter (94) direkt von der Nebenlinie (44, 44') zu dem Karren (52) bewegt.

9. System nach einem der Ansprüche 1 bis 8, bei dem der Transportmechanismus (50, 50') ein ausfahrbares Stützglied (54) und eine vertikale Hebevorrichtung (56) umfasst, wobei das ausfahrbare Stützglied (54) Behälter (94) von der mindestens einen der Nebenlinien (44, 44') nehmen und die Behälter (94) in den zugeordneten Karren (52) platzieren kann und die vertikale Hebevorrichtung (56) das Stützglied (54) zwischen dem vertikalen Niveau der einen der Nebenlinien (44, 44') und dem vertikalen Niveau des zugeordneten Karrens (52) bewegen kann.

10. System nach Anspruch 9, bei dem das ausfahrbare Stützglied (54) mehrere Finger (80) umfasst, die zwischen Teilen der mindestens einen der Nebenlinien (44, 44') unter Behältern (94), die auf dieser Nebenlinie (44, 44') gestützt werden, kämmen.

11. System nach Anspruch 10, bei dem die Nebenlinie (44, 44') eine Förderfläche aus mehreren Rollengliedern (90) umfasst und bei dem die Finger (80) zwischen den Rollengliedern (90) kämmen.

12. System nach Anspruch 10 oder 11, bei dem die vertikale Hebevorrichtung (56) die Finger (80) anhebt, um einen Behälter (94) von der einen der Nebenlinien (44, 44') zu nehmen, und sie absenkt, um einen Behälter (94) in den zugeordneten Karren (52) zu platzieren.

13. System nach Ansprüchen 8 bis 12, bei dem das ausfahrbare Stützglied (54) gemäß einem gesteuerten Beschleunigungsprofil ausgefahren wird.

14. System nach Anspruch 13, bei dem das ausfahrbare Stützglied (54) von einem Motor mit variabler Frequenz ausgefahren wird.

15. System nach Ansprüchen 9 bis 14, bei dem die vertikale Hebevorrichtung (56) servogesteuert ist.

16. System nach Ansprüchen 1 bis 15, das mehrere der Transportmechanismen (50, 50') umfasst, wobei jeder der Transportmechanismen (50, 50') betriebsmäßig gesperrt wird, wenn ein von diesem Transportmechanismus (50, 50') bedienter Karren (52) ausgetauscht wird.

17. System nach Ansprüchen 1 bis 16, bei dem andere Transportmechanismen (50, 50') nicht betriebsmäßig gesperrt werden, wenn einer der Transportmechanismen (50, 50') betriebsmäßig gesperrt wird.

18. System nach Ansprüchen 1 bis 17, bei dem die Förderfläche von mehreren angetriebenen Rollen oder von einem Transmissionswellenförderer definiert wird.

19. System nach einem der Ansprüche 1 bis 18, bei dem jeder der Umleiter (42) ein Hochstellumleiter ist.

20. System nach Ansprüchen 1 bis 19, bei dem die Nebenlinien (44, 44') an beiden Seiten der Förderfläche angeordnet sind und bei dem jeder der Umleiter (42) bidirektional ist.

21. System nach einem der Ansprüche 1 bis 20, das eine in der Nähe jedes der Karren (52) positionierte Ausrichtvorrichtung (102) umfasst, die in den zugeordneten Karren (52) platzierte Behälter (94) ausrichtet.

22. System nach Anspruch 21, bei dem die Ausrichtvorrichtung (102) trichterförmig ist.

23. System nach einem der Ansprüche 9 bis 22, bei dem die Finger (80) horizontal ausgefahren werden können, um einen Behälter (94) in Eingriff zu nehmen.

24. System nach einem der Ansprüche 9 bis 22, bei dem das ausfahrbare Stützglied (54) weiterhin ein Abstreiferglied (76) umfasst, das unabhängig von den Fingern (80) horizontal ausgefahren werden kann, um Behälter (94) von den Fingern (80) zu schieben.

25. System nach einem der Ansprüche 1 bis 24, das mehrere Karrenbereiche umfasst, die jeweils eine Einfassung (96) mit einem beweglichen Tor (98) aufweisen, das gezielt geöffnet werden kann, damit andere Karren (52) in anderen Karrenbereichen beladen werden können, während ein Karren (52) entfernt wird.

26. Verfahren zum Versand ungeordneter Behälter (94) mit sortierter Post an Versandkarren (52), wobei Behälter (94) gemäß bestimmter Orte sortiert werden, die jeweils einem von Hand betriebenen Karren (52) zugeordnet sind, und Behälter (94) automatisch zwischen jedem der bestimmten Orte und dem zugeordneten Karren (52) transportiert werden.

27. Verfahren nach Anspruch 26, bei dem das Sammeln einer Schicht Behälter (94) an einem bestimmten Ort und das Transportieren der Schicht zwischen diesem Ort und dem zugeordneten Karren (52) zum Transportieren gehören.

28. Verfahren nach Anspruch 27, bei dem das Sammeln einer Reihe Behälter (94) an dem bestimmten Ort, das Verschieben der Reihe Behälter und das Sammeln einer weiteren Reihe Behälter (94) an diesem bestimmten Ort zum Sammeln einer Schicht gehören.

29. Verfahren nach Anspruch 27 oder 28, bei dem das Bereitstellen eines Sortierförderers (36, 36') mit einer von einer Förderfläche definierten Hauptlinie und mehreren entlang der Hauptlinie positionierten Nebenlinien (44, 44') und weiterhin das Umleiten von Behältern (94) von der Förderfläche zu den Nebenlinien (44, 44') an den bestimmten Orten zum Sortieren von Behältern gehören.

30. Verfahren nach einem der Ansprüche 26 bis 29, bei dem das Positionieren eines zugeordneten Karrens (52) unter dem zugeordneten Ort und das Veranlassen von relativer Bewegung zwischen Behältern (94) an dem bestimmten Ort und dem zugeordneten Karren (52) zum Transportieren von Behältern (94) gehören.

31. Verfahren nach einem der Ansprüche 26 bis 30, bei dem mehrere Karrenbereiche bereitgestellt werden, die jeweils eine Einfassung (96) mit einem beweglichen Tor (98) aufweisen, wobei eines der Tore (98) gezielt geöffnet werden kann, damit andere Karren (52) in anderen Karrenbereichen beladen werden können, während ein Karren (52) entfernt wird.

## Revendications

1. Système d'expédition de courrier (20, 20'), comprenant :
un transporteur trieur (36, 36') comportant une voie principale définie par une surface de transport et transportant des contenants (94) disposés de manière aléatoire de courrier trié, une pluralité de voies latérales (44, 44') s'étendant depuis la voie principale en direction des chariots (52) particuliers d'expédition et un mécanisme dérouteur (42, 42') au niveau de chacune des voles latérales (44, 44'), qui dévie de manière sélective des contenants (94) depuis la surface de transport vers l'une associée des voies latérales (44, 44') ;
**caractérisé en ce qu'**au moins un mécanisme de transport (50, 50') transporte des contenants (94) depuis chacune des voies latérales (44, 44') vers un chariot (52) juxtaposé à cette vole latérale (44, 44').

2. Système selon la revendication 1,
dans lequel ledit au moins un mécanisme de transport (50, 50') est actionné automatiquement et les chariots (52) sont actionnés manuellement.

3. Système selon la revendication 1 ou 2,
dans lequel la surface de transport est une boucle continue.

4. Système selon l'une quelconque des revendications 1 à 3,
comprenant un autre mécanisme dérouteur (40) qui dévie des contenants (94) depuis une voie d'alimentation (26) vers la surface de transport.

5. Système selon l'une quelconque des revendications 1 à 4,
dans lequel ledit au moins un mécanisme de transport (50, 50') abaisse des contenants (94) depuis chacune des voies latérales (44, 44') vers un chariot (52) sous-jacent associé à cette voie latérale (44, 44').

6. Système selon l'une quelconque des revendications 1 à 5,
dans lequel ledit au moins un mécanisme de transport (50, 50') comprend une pluralité de mécanismes de transport (50, 50') stationnaires, l'un d'entre eux étant associé à chacune des voies latérales (44,44').

7. Système selon l'une quelconque des revendications 1 à 6,
dans lequel ledit au moins un mécanisme de transport (50, 50') se déplace entre plusieurs des voies latérales (44,44').

8. Système selon l'une quelconque des revendications 1 à 7,
dans lequel ledit au moins un mécanisme de transport (50, 50') élève un chariot (52) sous-jacent associé à cette voie latérale (44, 44') au niveau de cette voie latérale (44, 44') et déplace des contenants (94) directement de la voie latérale (44,44') sur le chariot (52).

9. Système selon l'une quelconque des revendications 1 à 8,
dans lequel le mécanisme de transport (50, 50') comprend un élément de support télescopique (54) et un dispositif de levage vertical (56), l'élément de support télescopique (54) est conçu pour récupérer des contenants (94) depuis ladite au moins une des voies latérales (44, 44') et les introduire dans le chariot (52) associé et le dispositif de levage vertical (56) est conçu pour déplacer l'élément de support (54) entre le niveau vertical de ladite une des voies latérales (44,44') et le niveau vertical du chariot (52) associé.

10. Système selon la revendication 9,
dans lequel l'élément de support télescopique (54) comprend une pluralité de doigts (80) qui sortent entre des portions de ladite au moins une des voies latérales (44, 44') sous des contenants (94) supportés sur cette voie latérale (44, 44').

11. Système selon la revendication 10,
dans lequel la voie latérale (44, 44') comprend une surface de transport constituée d'une pluralité de d'éléments formant rouleaux (90) et dans lequel les doigts (80) sortent entre les éléments formant rouleaux (90).

12. Système selon la revendication 10 ou 11,
dans lequel le dispositif de levage vertical (56) soulève les doigts (80) vers le haut afin de récupérer un contenant (94) de ladite une des voies latérales (44, 44') et abaisse les doigts (80) pour introduire un contenant (94) dans le chariot (52) associé.

13. Système selon les revendications 8 à 12,
dans lequel l'élément de support télescopique (54) est étendu selon un profil d'accélération commandé.

14. Système selon la revendication 13,
dans lequel l'élément de support télescopique (54) est étendu au moyen d'un moteur à fréquence variable.

15. Système selon les revendications 9 à 14,
dans lequel le dispositif de levage vertical (56) est asservi.

16. Système selon les revendications 1 à 15,
comprenant une pluralité de mécanismes de transport (50, 50'), dans lequel chacun des mécanismes de transport (50, 50') est mis hors service lorsqu'un chariot (52) desservi par ce mécanisme de transport (50, 50') est remplacé.

17. Système selon les revendications 1 à 16,
dans lequel d'autres mécanismes de transport (50, 50') ne sont pas mis hors service lorsque l'un des mécanismes de transport (50, 50') est mis hors service.

18. Système selon les revendications 1 à 17,
dans lequel la surface de transport est définie par une pluralité de rouleaux commandés ou par un transporteur à rouleaux commandés par arbre de transmission.

19. Système selon l'une quelconque des revendications 1 à 18,
dans lequel chacun des mécanismes dérouteurs (42) est un dérouteur à rouleaux inclinables.

20. Système selon l'une quelconque des revendications 1 à 19,
dans lequel les voies latérales (44, 44') sont disposées des deux côtés de la surface de transport et dans lequel chacun des dérouteurs (42) est bidirectionnel.

21. Système selon l'une quelconque des revendications 1 à 20,
comprenant un dispositif d'alignement (102) situé dans une position adjacente à chacun des chariots (52), qui aligne des contenants (94) introduits dans le chariot (52) associé.

22. Système selon la revendication 21,
dans lequel le dispositif d'alignement (102) a la forme d'un entonnoir.

23. Système selon l'une quelconque des revendications 9 à 22,
dans lequel les doigts (80) peuvent s'étendre horizontalement pour s'engager avec un contenant (94).

24. Système selon l'une quelconque des revendications 9 à 22,
dans lequel l'élément de support télescopique (54) comprend, en outre, un élément formant séparateur (76) pouvant être allongé horizontalement indépendamment des doigts (80) afin de faire coulisser des contenants (94) hors des doigts (80).

25. Système selon l'une quelconque des revendications 1 à 24,
comprenant une pluralité de zones de chariot ayant chacune une fermeture (96) munie d'une porte mobile (98) qui peut être ouverte de manière sélective pour permettre le chargement d'autres chariots (52) situés dans d'autres zones de chariot pendant qu'un chariot (52) est retiré.

26. Procédé d'expédition de contenants (94) disposés de manière aléatoire de courrier trié vers des chariots (52) d'expédition, comprenant les étapes qui consistent en :
le tri de contenants (94) à des emplacements particuliers, chacun étant associé à un chariot (52) actionné manuellement ; et le transport automatique de contenants (94) entre chacun des emplacements particuliers et le chariot (52) associé.

27. Procédé selon la revendication 26,
dans lequel le transport comprend l'accumulation d'une couche de contenants (94) en un emplacement particulier et le transport de la couche entre cet emplacement et le chariot (52) associé.

28. Procédé selon la revendication 27,
dans lequel l'accumulation d'une couche comprend l'accumulation d'une rangée de contenants (94) à cet emplacement particulier, le décalage de la rangée de contenants et l'accumulation d'une autre rangée de contenants (94) à cet emplacement particulier.

29. Procédé selon la revendication 27 ou 28,
dans lequel le tri des contenants comprend
la foumiture d'un transporteur trieur (36, 36') comportant une voie principale définie par une surface de transport et une pluralité de voies latérales (44, 44') positionnées le long de la voie principale et comprend en outre la déviation de contenants (94) depuis la surface de transport vers les voies latérales (44, 44') à cet emplacement particulier.

30. Procédé selon l'une quelconque des revendications 26 à 29,
dans lequel le transport des contenants (94) comprend le positionnement d'un chariot (52) associé au-dessous de l'emplacement associé et le déclenchement d'un mouvement relatif entre les contenants (94) à cet emplacement particulier et le chariot (52) associé.

31. Procédé selon l'une quelconque des revendications 26 à 30,
dans lequel une pluralité de zones de chariot est fournie, chaque zone ayant une fermeture (96) munie d'une porte mobile (98) et ouvrant de manière sélective l'une des portes (98) pour permettre le chargement d'autres chariots (52) situés dans d'autres zones de chariot pendant qu'un chariot (52) est retiré.
